# EUROPÄISCHE PATENTANMELDUNG

(11) **EP 0 837 081 A1**
(43) Veröffentlichungstag der Anmeldung: **22.04.1998**
(21) Anmeldenummer: 97117629.2
(22) Anmeldetag: 11.10.1997
(51) Int. Cl.: C08G 18/38, C08J 9/00, C08K 3/34

(54) **Verfahren zur Herstellung eines Dämmelementes**

(30) Priorität: 18.10.1996 DE 19643046
(71) Anmelder: Heinemann, Herbert, D-75181 Pforzheim (DE)
(72) Erfinder: Heinemann, Herbert, D-75181 Pforzheim (DE)
(74) Vertreter: Reimold, Otto, Dipl.-Phys.Dr.

(57) **Zusammenfassung**

Bei einem Verfahren zur Herstellung eines Dämmelementes aus Polyurethanhartschaum werden die beiden Polyurethankomponenten Polyol udn Isocyanat einer Mischeinrichtung und einer Dämmelement-Formeinrichtung zugeführt. Ferner kommt Wasserglaspulver mit einem SiO₂/Alkalioxid-Massenverhältnis im Bereich von etwa 2 : 0,8 bis 2 : 1,2, einer Korngröße im wesentlichen kleiner als 0,4 mm und einem Schüttgewicht größer als 500 p/l zur Anwendung, das entweder vor dem Vermischen der einen und/oder anderen der beiden Polyurethankomponenten unter Bildung einer Aufschlämmung mit einem Wasserglasanteil von bis zu 60 Gewichtsprozent in der jeweiligen Aufschlämmung untermischt oder bei oder nach dem Vermischen der Mischung zugegeben wird, so daß der Wasserglasanteil in der Mischung bis zu 60 Gewichtsprozent beträgt. Entweder wird vor dem Vermischen dem Polyol oder beim Vermischen der beiden Komponenten Wasser zugegeben, das mit dem Isocyanat unter Entstehung von Kohlendioxid reagiert, das seinerseits zum Teil mit dem Wasserglas unter Bildung von Kieselsäure reagiert.

## Beschreibung

Die Erfindung betrifft ein Verfahren zur Herstellung eines insbesondere bei Gebäuden zu verwendenden Dämmelements aus Polyurethanhartschaum.

Dämmelemente aus geschäumtem Polyurethan werden vor allem zur Wärmedämmung von Gebäuden verwendet. Sie werden insbesondere mit plattenförmiger Gestalt hergestellt, so daß sich Gebäudewände, -decken und -dächer mit ihnen verkleiden lassen.

Solche Dämmelemente sollten möglichst ohne Alterungserscheinungen stabil sein und dauerhaft konstante Dämmeigenschaften aufweisen.

Um dies mit einfachen Maßnahmen zu erreichen, ist gemäß vorliegender Erfindung ein Verfahren zur Herstellung eines insbesondere bei Gebäuden zu verwendenden Dämmelements aus Polyurethanhartschaum vorgesehen, bei dem man die beiden Polyurethankomponenten Polyol und Isocyanat einer sie miteinander vermischenden Mischeinrichtung und einer Dämmelement-Formeinrichtung zuführt, wobei man Wasserglas in Pulverform mit einem SiO₂/Aklalioxid-Massenverhältnis im Bereich von etwa 2 : 0,8 bis 2 : 1,2, einer Korngröße im wesentlichen kleiner als 0,4 mm und einem Schüttgewicht größer als 500 p/l entweder vor dem Vermischen der einen und/oder anderen der beiden Polyurethankomponenten unter Bildung einer Aufschlämmung mit einem Wasserglasanteil von bis zu 60 Gewichtsprozent in der jeweiligen Aufschlämmung untermischt oder bei oder nach dem Vermischen der beiden Polyurethankomponenten der Mischung zugibt, so daß der Wasserglasanteil in der Mischung bis zu 60 Gewichtsprozent beträgt, und wobei man entweder vor dem Vermischen dem Polyol oder beim Vermischen der beiden Komponenten Wasser in Abhängigkeit von der Wasserglasmenge zugibt, das mit dem Isocyanat unter Entstehung von Kohlendioxid reagiert, das seinerseits zum Teil mit dem Wasserglas unter Bildung von Kieselsäure reagiert.

Als Wasserglas bezeichnet man die aus SiO₂ und einem der Alkalioxide Na₂O und K₂O hergestellten Silikate der Alkalimetalle, also insbesondere die Natriumsilikate Na₂SiO₃ und Na₂Si₂O₅ und die entsprechenden Kaliumsilikate K₂SiO₃ und K₂Si₂O₅.

Solches Wasserglas mit den oben genannten Eigenschaften wird also in pulveriger Form entweder vor dem Vermischen dem Polyol und/oder dem Isocyanat oder beim oder nach dem Vermischen dieser Polyurethan-Ausgangskomponenten der Polyol-Isocyanat-Mischung zugegeben, die dann zusammen mit dem zuvor dem Polyol oder beim Zusammenführen der beiden Komponenten zugefügten Wasser den Polyurethanschaum ergeben, der in der das Dämmelement formenden Formeinrichtung aufschäumt. Dabei wird das Wasserglas dem Polyol und/oder dem Isocyanat bzw. der Mischung so zugemischt, daß es in der jeweiligen Komponente bzw. in der Mischung einer stabilen Aufschlämmung entsprechend in gleichmäßiger feiner Verteilung enthalten ist.

Eine solche Aufschlämmung ist in gleicher Weise wie die betreffende Polyurethankomponente bzw. Mischung ohne Wasserglas pumpfähig, so daß bestehende Fertigungsanlagen - sieht man von der zum Zugeben des Wasserglaspulvers erforderlichen Einrichtung ab - unverändert weiterhin eingesetzt werden können. Alle sonstigen Verarbeitungsschritte für die übliche Herstellung von Polyurethanschäumen können beibehalten werden, so daß das herkömmliche Herstellungsverfahren, bei dem die genannten organischen Komponenten Polyol und Isocyanat unter hohem Druck in einer statischen Mischeinrichtung oder dergleichen miteinander vermischt werden, praktisch nicht verändert werden muß.

Durch die Zugabe des Wasserglaspulvers wird nun folgendes erreicht:

Das der Polyol-Komponente oder beim Vermischen mit dem Isocyanat zugegebene Wasser reagiert beim Vermischen der beiden Ausgangskomponenten unter Entstehung von Kohlendioxid mit dem Isocyanat. Dieses CO₂ wirkt sodann in zweierlei Weise.

Zum einen bildet es sozusagen ein Schäumgas, das das Polyurethan zum Aufschäumen bringt und die dabei entstehenden und im fertigen Dämmelement vorhandenen Schaumblasen füllt. Da CO₂ bessere Isoliereigenschaften als Luft besitzt, ergibt sich eine entsprechend gute Wärmedämmung.

Zum anderen reagiert das CO₂ unter Bildung von Kieselsäure mit dem Wasserglas. Da das Wasserglaspulver homogen in der Mischung enthalten ist, ergibt sich auf diese Weise im Fertigprodukt ein über dessen ganzes Volumen verteiltes Kieselsäuregerüst, wodurch die Zellen stabilisiert und somit die Stabilität bzw. Festigkeit des ganzen Dämmelements vergrößert wird. Dabei ergibt sich wegen der großen CO₂-Konzentration in den Blasen um diese herum sozusagen eine Kieselsäurehaut, so daß die Blasen entsprechend dichter umschlossen werden und somit eine größere Dichtheit gegen ein Diffundieren des CO₂ aus den Blasen vorhanden ist.

Somit erhält man außer der Stabilität dauerhaft praktisch gleichbleibende Dämmeigenschaften.

Auch der bei herkömmlichen Polyurethanschaumkörpern im Laufe der Zeit zu beobachtende und auf ein Aufbrechen der Blasen und Abströmen bzw. Wegdiffundieren des die Blasen füllenden Gases zurückzuführende Volumenschwund tritt nicht oder nur in erheblich vermindertem Umfang auf.

Ein weiterer Vorteil besteht darin, daß sich durch das Wasserglas bzw. die Kieselsäurepartikel eine Gewichtszunahme und somit zusätzlich zur Wärmedämmung eine verbesserte Schalldämmqualität ergibt.

Des weiteren wird die Brandfestigkeit erhöht, so daß das Dämmelement entsprechend hohen Temperaturen ausgesetzt werden kann.

Auf Grund der mit Bezug auf bisherige Dämmelemente größeren Brand-Widerstandsfähigkeit wird das Einsatzgebiet der Dämmelemente beträchtlich erweitert.

Ferner werden die Rohstoffkosten und somit die Gestehungskosten des Dämmelements verringert, da in dem Maße, wie das verhältnismäßig billige Wasserglaspulver eingesetzt wird, weniger von den teureren Polyurethankomponenten Polyol und Isocyanat benötigt wird.

Bei dem erfindungsgemäßen Verfahren wird Wasserglaspulver mit einem Schüttgewicht größer als 500 p/l verwendet. Bei kleinerem Schüttgewicht würde die Gefahr eines Hochsteigens der Wasserglaspartikel in der Polyol- und/oder der Isocyanatkomponenten bzw. in der Mischung und somit die Gefahr einer Entmischung der jeweiligen Aufschlämmung bestehen.

Um umgekehrt ein zu frühes, ebenfalls zu einer Entmischung der betreffenden Aufschlämmung führendes Absinken der Wasserglaspartikel in der jeweiligen Polyurethankomponente bzw. in der Mischung zu vermeiden, sollte die Korngröße, wie erwähnt, im wesentlichen kleiner als 0,4 mm sein.

Ferner hat sich herausgestellt, daß das Wasserglas ein SiO₂/Alkalioxid-Massenverhältnis im Bereich von etwa 2 : 0,8 bis 2 : 1,2 haben sollte, um mit dem erfindungsgemäßen Verfahren den gewünschten Erfolg zu erzielen.

Das Wasserglaspulver wird bei seiner Zugabe vor dem Vermischen der Polyurethankomponenten der jeweiligen Komponente in einer solchen Menge untergemischt, daß sein Anteil in der jeweiligen Aufschlämmung bis zu 60 Gewichtsprozent beträgt. Es können also im Extremfall 60 Gewichtsprozent der Polyolaufschlämmung und 60 Gewichtsprozent der Isocyanataufschlämmung von Wasserglas gebildet werden.

Im Falle der Zugabe des Wasserglaspulvers beim oder nach dem Vermischen der beiden Polyurethankomponenten beträgt der Anteil des Wasserglases in der Mischung ebenfalls bis zu 60 Gewichtsprozent. Der genaue Wert richtet sich danach, in welchem Ausmaß das Dämmelement die genannten Eigenschaften aufweisen soll.

Zweckmäßigerweise beträgt der Wasserglasanteil in der jeweiligen Aufschlämmung bzw. in der Mischung etwa bis zu 30 Gewichtsprozent. Dabei können etwa 15 Gewichtsprozent vorteilhaft sein.

Die vor dem Vermischen dem Polyol oder beim Vermischen den beiden Polyurethankomponenten zudosierte Wassermenge ist von der zugegebenen Wasserglasmenge abhängig und muß daher in Abhängigkeit von dieser verändert werden. Die untergemischte Wassermenge ist ja bestimmend für die entstehende Menge an CO₂, das mit dem Wasserglas unter Bildung von Kieselsäure reagiert. Dabei muß aber stets genügend CO₂ zur Schaumbildung übrig bleiben. Mit zunehmender Wasserglasmenge wird also in entsprechend zunehmendem Ausmaß CO₂ für die Bildung von Kieselsäure verbraucht. Um trotzdem die gewünschte Schaumbildung zu erhalten, muß daher entsprechend mehr Wasser zudosiert werden.

Der Kristallwassergehalt des Wasserglases sollte im Bereich von etwa 12 bis 30 Gewichtsprozent und dabei zweckmäßigerweise etwa bei 21 Gewichtsprozent liegen.

Selbstverständlich können den Polyurethankomponenten auch weitere Zusatzmittel beigemischt werden, so insbesondere beispielsweise dem Polyol ein die Polyurethanbildung beschleunigender Aktivator. Diese Reaktionsbeschleunigung ist auch in Zusammenhang damit von Vorteil, daß sie der Gefahr einer Entmischung des Wasserglaspulvers aus den dieses enthaltenden Polyurethankomponenten entgegenwirkt.

## Patentansprüche

1. Verfahren zur Herstellung eines insbesondere bei Gebäuden zu verwendenden Dämmelements aus Polyurethanhartschaum, bei dem man die beiden Polyurethankomponenten Polyol und Isocyanat einer sie miteinander vermischenden Mischeinrichtung und einer Dämmelement-Formeinrichtung zuführt, wobei man Wasserglas in Pulverform mit einem SiO₂/Aklalioxid-Massenverhältnis im Bereich von etwa 2 : 0,8 bis 2 : 1,2, einer Korngröße im wesentlichen kleiner als 0,4 mm und einem Schüttgewicht größer als 500 p/l entweder vor dem Vermischen der einen und/oder anderen der beiden Polyurethankomponenten unter Bildung einer Aufschlämmung mit einem Wasserglasanteil von bis zu 60 Gewichtsprozent in der jeweiligen Aufschlämmung untermischt oder bei oder nach dem Vermischen der beiden Polyurethankomponenten der Mischung zugibt, so daß der Wasserglasanteil in der Mischung bis zu 60 Gewichtsprozent beträgt, und wobei man entweder vor dem Vermischen dem Polyol oder beim Vermischen der beiden Komponenten Wasser in Abhängigkeit von der Wasserglasmenge zugibt, das mit dem Isocyanat unter Entstehung von Kohlendioxid reagiert, das seinerseits zum Teil mit dem Wasserglas unter Bildung von Kieselsäure reagiert.

2. Verfahren nach Anspruch 1, dadurch gekennzeichnet, daß der Wasserglasanteil in der jeweiligen Aufschlämmung bzw. in der Mischung etwa bis zu 30 Gewichtsprozent beträgt und zweckmäßigerweise etwa bei 15 Gewichtsprozent liegt.

3. Verfahren nach Anspruch 1 oder 2, dadurch gekennzeichnet, daß pulveriges Wasserglas mit einem Kristallwassergehalt im Bereich von etwa 12 is 30 Gewichtsprozent verwendet wird.

4. Verfahren nach Anspruch 3, dadurch gekennzeichnet, daß der Kristallwassergehalt etwa bei 21 Gewichtsprozent liegt.

5. Verfahren nach einem der Ansprüche 1 bis 4, dadurch gekennzeichnet, daß mindestens einer der Polyurethankomponenten, zweckmäßigerweise dem Polyol, ein Aktivator beigemischt wird.
